(19) Europäisches Patentamt
European Patent Office
Office européen des brevets

(11) Publication number: **0 612 766 A1**

# (12) EUROPEAN PATENT APPLICATION

(21) Application number: **94102756.7**

(22) Date of filing: **24.02.94**

(51) Int. Cl.5: **C08F 14/06**, C08F 14/08, C08F 14/20, C08F 14/22

(30) Priority: **26.02.93 US 23505**

(43) Date of publication of application: **31.08.94 Bulletin 94/35**

(84) Designated Contracting States: **DE FR GB IT**

(71) Applicant: **The Geon Company**
**6100 Oak Tree Boulevard**
**Cleveland, Ohio 44131 (US)**

(72) Inventor: **Poledna, David James**
**153 Georgete Drive**
**Grafton, Ohio 44044 (US)**

(74) Representative: **von Kreisler, Alek, Dipl.-Chem. et al**
**Patentanwälte**
**von Kreisler-Selting-Werner**
**Bahnhofsvorplatz 1 (Deichmannhaus)**
**D-50667 Köln (DE)**

## (54) Suspension polyvinyl halide or polyvinylidene halide powder coating and molding resin, compounds and articles therefrom.

(57) Powder coating and molding resins, compounds prepared from polyvinyl halide or polyvinylidene halide resin powders are disclosed. The resins are made by a particular suspension process, formulated and coated on articles or molded thereby exhibiting good fusion characteristics and low or no orange peel after application by conventional molding and coating methods. The powder resins have an average particle size in the range of from about 35 microns to about 150 microns, preferably 50 microns to 130 microns. The resins are polymerized in the presence of a protective colloidal system comprising an ion sensitive polymer which is disrupted during the early phase of the polymerization, before about 50%, preferably about 20% monomer conversion. The disruption is effected by introducing an ionic material which causes the colloidal layer to substantially separate from the growing resin particle, thereby removing all or substantially all of the protective colloidal residue from the suspended polymerizing particles.

EP 0 612 766 A1

## Field of the Invention

The present invention relates to polyvinyl halide and polyvinylidene halide powder resins adaptable for rotational molding, slush molding and powder coating of articles. Powder coating refers principally to the method of electrostatic spray coating or fluidized bed dipping. The powder coating compositions, and compounds are useful for providing durable and/or aesthetic finishes on the exteriors of products such as tubing, wires, fence posts, lawn furniture and bulk or sheet molding compound- based articles to name a few common examples. The slush or rotational molding of these resins and compounds yields hollow articles.

## Background of the Invention

Powder coating compositions are well known in the art and have been attractive in the replacement of solvent and water-based paints to coat a variety of different substrates. These powder coatings are applied by conventional fluid bed dipping or electrostatic spray techniques. Thermoplastic powder compounds are also well established for molding of hollow articles by the slush or rotational molding methods. Dispersion and bulk (mass) polymerized polyvinyl halide or polyvinylidene halide powder coatings are broadly used and well known as shown by Richardson U.S. Pat. No. 3,842,027 issued Oct. 15, 1974.

Many polymers including thermoplastic and thermosetting types are stable in powdered formulations used in the aforementioned powder coating and molding methods. Thermoplastic powder coatings are based on resins including polyethylene, polypropylene, nylon, polyvinyl chloride, polyvinyl fluoride, polyvinylidene chloride, polyvinylidene fluoride, acrylic, and thermoplastic polyester resins, to name a few. Other thermoplastic resins from which powder coatings are made include cellulose esters, ethylene-chlorotrifluoroethylene copolymer, and poly(phenylene sulfide). The present invention is based on thermoplastic particulate polyvinyl halide or polyvinylidene halide, including copolymers hereinafter sometimes termed VH or VDH resins.

The thermosetting powder coatings are based on relatively low molecular weight resins which crosslink upon exposure to heat. The generic types of resins used in such thermosetting powder coatings include epoxy, polyester and acrylic resins. Thermosetting powder coatings may also be made with resin blends of epoxy and polyester resins, or epoxy and VH or VDH resin to provide powder coatings having properties not obtainable with individual resins alone.

Powder resins are usually mechanically ground such as with a micromill and sieved through a 200 mesh (75 micron) screen, for example, or another sieve size to control the particle size range desired for commercial applications. The thickness of the coating applied is directly related to the particle size average. The ground powder resin average particle size commercially available can be from about 20 microns and higher. This small particle size allows for very thin coating thickness. Typical VH or VDH resins are usable in the particle form they occur directly from the polymerization process, for example, the dispersion types of PVC or the mass PVC types. Powder resins made via the mass process range typically from about 65 microns to about 140 microns depending on commercial preferences. However, there is a practical limit on the minimum average particle size attainable by mass polymerization method of about 50 - 60 microns. This limits the commercial applicability of this resin class for very thin coatings.

Epoxy resin-based powder coatings are usually ground and may be either internally crosslinked or may be crosslinked by a variety of external curing agents. Examples of external crosslinking agents include dicyandiamide, modified and substituted dicyandiamide and anhydrides. In addition to the curing agent, most epoxy-based powders contain a flow-control additive. The polyester-based powder coatings employ hydroxy-functional polyesters which are cured through the hydroxyl sites. Curing agents useful with these polyesters include melamine-formaldehyde resin, isocyanates and blocked isocyanates. Typical of these curing agents is isophorone diisocyanate (IPDI) blocked with caprolactam. The polyester powders may also be based on carboxy-functional polyesters. In this case the polyester may be cured with a polyepoxide such as triglycidyl isocyanurate. Typical acrylic resin-based powder coatings contain a resin made by copolymerizing glycidyl methacrylate into an acrylic resin backbone to provide a reactive group which can then be cured by, for example, a $C_{10}$-$C_{12}$ dibasic acid or a carboxy-terminated polymer.

Among the variety of application methods in the use of powder coatings there are the aforementioned fluidized bed and spray coating. In the fluidized bed process, a preheated part or substrate is dipped or immersed in a fluidized bed, the powder being fluidized by introducing compressed air through a porous membrane into the powder bed. Mechanical vibration of the powder bed may also be used to enhance fluidization. Upon coming into contact with a preheated part, the powder particles fuse and adhere thereto. Post-heating is required if the thermal inertia of the part is insufficient to cause the adhered powder

particles to adequately flow, fuse and cure.

The electrostatic fluidized bed process utilizes a fluidized powder bed and electrostatic charging electrodes to create a cloud of electrostatically charged powder particles in a chamber above the powder bed. The electrostatically like-charged powder particles, repel each other and move upward in the chamber. Grounded substrates or parts to be coated are dipped or immersed in the cloud of charged powder particles. Preheating of the part is not necessary with this method of powder coating since the forces of electrostatic attraction cause the deposition of powder on the surface of the grounded part irrespective of whether it is hot or cold, the charges on the powder particles holding them in place until the part is post-heated.

In the electrostatic spray powder coating method powder coating particles are supplied to a spray gun and are electrostatically charged in the nozzle region thereof. Upon actuation of the spray gun, a cloud of comminuted charged powder particles is discharged from the gun. The gun is used to direct the cloud of charged powder particles toward the grounded substrate or part to be coated. The propelling force is provided by the electrostatic forces of attraction between the charged particles and the grounded part to be coated and by the air that is used to transport the powder from a supply thereof to the spray gun to effect the discharge of such powder therefrom. Powder particles deposited on the part are held thereon by electrostatic forces. The coated part is then subjected to heat, in an oven, for example, where the layer of unfused powder particles melts, flows and cures to provide a continuous film.

A more detailed discussion of the foregoing methods of powder coating including those involving an electrostatic powder disc and an electrostatic chamber is given in the "Users Guide to POWDER COATING" published by the Association for Finishing Processes of the Society of Manufacturing Engineers, one SME Drive, Dearborn, Michigan, 48121. Also, an in-depth discussion of the basic process involved in electrostatic powder spray coating is given in the paper entitled "Surface films produced by electrostatic powder deposition" by A.W. Bright, Department of Electrical Engineering, University of Southampton S509 5NH, published in the J. Oil Col. Chem. Assoc. 60, 23-27. Further description of powder coating methods may also be found in Kirk-Othmer, Encyclopedia of Chemical Technology, Third Edition, Vol. 19, "Powder Coatings, " pages 1-27, 1982.

In the practice of powder molding and coating there is little or no mechanical deformation forces applied during the fusion sufficient to form a smooth finish on the part or surface of the mold. Therefore, the melt flow and fusion properties of the resin are paramount considerations in designing resins with optimum flow and fusion characteristics. Mass polymerized polyvinyl chloride exhibits the desired flow and fusion characteristics enabling it's widespread use in commercial powder coating applications. However, the largest and most economically produced class of PVC resin, made via suspension polymerization, does not exhibit these characteristics. It has been also been observed that suspension polyvinyl chloride resins are not possessed of adequate fusion characteristics regardless of the amount of heat input, or length of dwell time for fusion. This insufficiency is manifested as excessive orange peel, low gloss and roughness of the article surface.

In as much as it would be desirable from an economic stand point to employ the suspension polymerization process to manufacture powder resin acceptable in surface appearance after fusion, such a resin has not heretofore been disclosed.

## Summary of the Invention

It is an object of the present invention to prepare polyvinyl halide or polyvinylidene halide resin powders made by a particular suspension process to prepare resin powders exhibiting good fusion characteristics and low or no orange peel after application by conventional molding and coating methods.

It is another object to provide powder coating and molding compounds made with the suspension polymerized resin which fuse under heat into smooth coatings or moldings with improved gloss and preferably the general appearance as good as compounds based on mass polymerized or other ground resins.

It is a further aspect of the invention to use suspension polymerized VH or VDH powder having an average particle size in the range of from about 25 microns to about 150 microns, preferably 30 microns to 130 microns, more preferably 50 microns to 80 microns, the VH or VDH resin being polymerized in the presence of a protective colloidal system comprising an ion sensitive polymer which is preferably disrupted during the early phase of the polymerization, before about 50%, preferably before 20% monomer conversion. The disruption is effected by introducing an ionic material which causes the colloidal layer to substantially separate from the growing resin particle, thereby removing all or substantially all of the protective colloidal residue from the suspended polymerizing particles.

## DETAILED DESCRIPTION OF THE INVENTION

The process used to produce the resin particles of this invention is an agitated aqueous suspension process. The essential feature for preparing the coating resin is the use of an ion sensitive polymer. Neutralizing this polymer generates an anion form or a cation form as a salt thereby causing the colloidal residue to substantially or completely desorb from the suspended polymerizing particles. Suitable ion sensitive dispersants which are neutralized with base include polyacrylic acid polymer, ethylene malic anhydride polymer, high molecular weight polyacrylic acid polymers and ethylene malic anhydride polymers, and the like. In the base neutralized polymers, the polymer is the anion in the salt form. In the acid neutralized ion sensitive polymer, the polymer is the cation in the salt form.

A preferred base neutralized ion sensitive polymer contains an incorporated comonomer having a plurality of terminally unsaturated co-polymerizable groups, to form a crosslinked polymer, for example, crosslinked polycarboxylic acid polymer, and which is substantially insoluble in water. The most preferred structure of the ion sensitive polymer enables sufficient hydrophilicity to undergo swelling in the aqueous suspension medium, but not to the extent that an aqueous dispersion made therefrom at an effective concentration for suspension of monomer(s) cannot be adequately agitated. Ion sensitive polymers that have little or no affinity for water and do not swell to any measurable degree are not suitable for preparing the resins of the present invention.

The most preferred carboxylic acid containing monomers for preparing the base neutralized ion sensitive polymer are those which contain at least one polymerizable carbon-to-carbon double bond in the $\alpha,\beta$-position with respect to a carboxyl group such as:

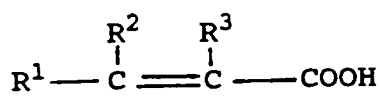

(1)

wherein $R^1$ is hydrogen or a carboxyl group, and each of $R^2$ and $R^3$ is a hydrogen or a monovalent substituent group which is linked to one of the doubly bonded carbon atoms. Carboxylic acids within this definition include acids, such as acrylic acid, wherein the double bond is in the terminal position such as

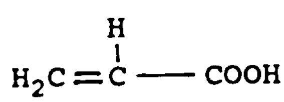

(2)

the dicarboxylic acids such as maleic acid and anhydrides of the general structure

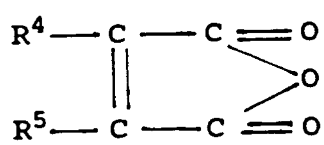

(3)

wherein $R^4$ and $R^5$ are monovalent substitute groups and especially those selected from the group consisting of hydrogen and halogen groups and alkyl, aryl, alkaryl, aralkyl, and cycloaliphatic radicals.

Included within the class of carboxylic acids, shown by (1) above, are the acrylic acids, such as acrylic acid itself, methacrylic acid, ethacrylic acid, $\alpha$- and $\beta$-chloro and bromo-acrylic acids, crotonic acid, maleic acid, itaconic acid, including mixtures.

Polymerizable carboxylic anhydrides include any of the anhydrides of the above acids, including mixed anhydrides, and those shown by generic formula (3) above, including maleic anhydride, and others. In many cases, it is preferred to copolymerize an anhydride monomer with a comonomer, such as methyl vinyl ether, styrene, ethylene, and the like.

It is preferred to employ ion sensitive polymeric dispersants which are made from polymers of $\alpha,\beta$-unsaturatedcarboxylic acids. The preferred carboxylic acids are those derived from the acrylic acid and $\alpha$-

substituted acrylic acids having the general formula

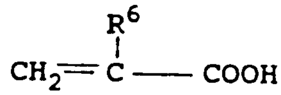

wherein $R^6$ is a monovalent substituent selected from the group consisting of hydrogen, alkyl, like methyl, ethyl, etc., halogen, hydroxyl, carboxyl, amide, ester, lactone, and lactam.

The most preferred ion sensitive polymeric dispersants sensitive to bases are those prepared from the lightly crosslinked polymers of acrylic acid.

The crosslinking agents which may be employed with any of the carboxylic monomers, or mixtures thereof, may be any compound, not necessarily monomeric in nature, containing two or more terminal polymerizable $H_2C=C<$ groups per molecule. Examples of this class of materials include polyunsaturatedhydrocarbons, polyethers, polyesters, nitriles, acids, acid anhydrides, ketones, alcohols, and polyunsaturated compounds of this class incorporating one or more of these and other functional groups. Specific, examples include divinyl benzene, divinyl naphthalene, low-molecular weight and vinyl monomer soluble polymerized dienes, such as polybutadiene and other homopolymers of open chain aliphatic conjugated dienes, and other polyunsaturated hydrocarbons; polyunsaturated esters, ester-amides and other ester derivatives, such as ethylene glycol diacrylate, ethylene glycol dimethacrylate, allyl acrylate, methylene bisacrylamide, methylene bismethacrylamide, triacrylyl triazine, hexallyl trimethylene trisulfone, and many others; polyunsaturated ethers, such as divinyl ether, diallyl ether, dimethyl allyl ether, diallyl ethylene glycol ether, diallyl, triallyl and other polyallyl ethers of glycerol, butene-1,2-diol, 1-phenyl-1,2,3,-propanetriol, the polyallyl, -vinyl and -crotyl polyethers containing from two to seven or more of these or other alkenyl ether groupings per molecule and made from polyhydric alcohols, including erythritol, pentaerythritol, arabitol, iditol, mannitol, sorbitol, inositol, raffinose, glucose, sucrose, and many others, and other polyhydroxy carbohydrate derivatives; the corresponding polyalkenyl silanes, such as the vinyl and allyl silanes, and others. Of the class of polyalkenyl polyethers, those containing from two to seven alkenyl ether groups per molecule are particularly useful. Such materials are easily prepared by Williamson-type synthesis involving the reaction of an alkenyl halide, such as allyl chloride, allyl bromide, methallyl chloride, crotyl chloride, and the like, with a strongly alkaline solution of one or more of the polyhydroxy carbohydrates.

In the preferred monomeric mixture for making the crosslinked ion sensitive polymers, the monomeric materials should be present in certain proportions, although the exact proportions will vary considerably depending on the characteristics desired in the polymer. Small amounts of the polyalkenyl polyether copolymerize quite readily with carboxylic monomers and crosslinking can be effected with as little as 0.1% by weight thereof, based on the weight of the total mixture. When 0.1% to 4.0%, more preferably 0.20% to 2.5%, by weight of a polyether is utilized, water-insoluble polymers are obtained, especially with acrylic acids. Useful dispersants are also obtained when 0.1% to 6.0%, and preferably 0.2% to 5%, of the polyether is copolymerized with maleic anhydride.

With respect to polycarboxylic polymer embodiment it is generally desirable to incorporate as much of the polymerizable carboxylic monomer or monomers and as little of other comonomeric constituents as is consistent with the desired degree of water-solubility. Therefore, the monomer containing the ion sensitive substituent group should never be less than 25%, and preferably not less than 40%, by weight of the total monomeric mixture. Copolymers may be made from monomeric mixtures comprising from 25% to 99.9% of a carboxylic monomer, such as acrylic acid, 0.1% to 30% of a polyalkenyl ether, such as a polyallyl polyether of sucrose, and 5.0% to 74.9% of an additional comonomer(s). Preferred copolymers are the terpolymers resulting from the polymerization of from 40% to 95% by weight of acrylic acid, 0.20% to 2.5% by weight of polyallyl polyether, such as that of sucrose, and 4% to 59% of optional comonomer(s) such as maleic anhydride, N-methyl acrylamide, methyl vinyl ether, such as vinyl methyl ether, and a polyallyl polyether, in which the sum of the moles of vinyl ether and polyallyl polyether is substantially equivalent to the molar quantity of maleic anhydride present. It should be borne in mind that in the above proportions, if a maximum amount of two of the monomers are utilized, that somewhat less than maximum amounts of the other monomers must be utilized.

Suitable for use as additional comonomers in the production of ion sensitive polymer dispersants are monoolefinic vinyldene monomers containing one terminal $H_2C=C<$ group, such as styrene, the chloro and ethoxystyrenes, etc., acrylamide, N-methyl-acrylamide, N,N-dimethyl acrylamide, acrylonitrile,

methacrylonitrile, methyl acrylate, ethyl acrylate, 2-ethylhexyacrylate, methyl methacrylate, vinyl chloride, vinylidene chloride, vinylidene chlorbromide, vinyl carbazole, vinyl pyrrolidone, methyl vinyl ether, ethyl vinyl ether, n-butyl vinyl ether, methyl vinyl ketone, ethylene,isobutylene, dimethyl maleate, diethyl maleate, and many others. In addition to the above monoolefinic monomers, many of the divinyl dialkenyl or other polyfunctional esters, amides, ethers, ketones, and the like may be used especially those polyfunctional monomers which nominally function as crosslinking or insolubilizing monomers but which are easily saponified and hydrolyzed to additional hydroxyl, carboxyl and other hydrophilic groups. For example, an interpolymer of acrylic acid and divinyl ether is insoluble in water but upon standing gradually goes into solution probably due to hydrolysis and breaking of divinyl ether crosslinks. The presence of strong alkali or acid speeds dissolution. Spectroscopic analysis confirms the presence in the polymers of non-carboxylic hydroxyls. Similarly, diesters, such as diallyl maleate, ethylene glycol dimethacrylate, acrylic anhydride, betaallyloxy acrylate, and many others, are readily saponified or hydrolyzed by alkali or acid with the introduction of additional hydroxyl and/or carboxyl groups. Of the additional monomers, N-methyl acrylamide, methyl vinyl ether, ethyl vinyl ether and divinyl ether have been found particularly useful.

In the process of making the coating resins of this invention the amount of the ion sensitive dispersant can vary in the range of about 0.01 parts by weight to about 1.0 parts by weight based on 100 parts by weight of the monomer or monomers being polymerized. More preferably, the amount used will be in the range of about 0.02 parts by weight to about 0.5 parts by weight per 100 parts by weight of monomer or monomers being polymerized. The most preferred usage level is from about 0.02 parts to 0.06 parts by weight. When one contemplates preparing a resin having small particle size, an amount is increased as compared to the amount for larger particle size.

In the process to make the resins adapted for this invention, other secondary dispersants are optionally and preferably included in the polymerization. Dispersants which tend to form a skin on the resin particles such as methyl cellulose and polyvinyl acetate having a degree of hydrolysis above 70% are preferably avoided.

Secondary dispersants such as hydrolyzed polyvinyl acetate (PVA) having a degree of hydrolysis of about 20% to 70%, preferably from 40% to 60% are employed if an increased degree of porosity of the resin particles is desired. Secondary dispersants should be monomer soluble and not fully soluble in water. For PVA secondary dispersants, the higher the hydrolysis, the more water soluble the dispersant. For example, 30% hydrolyzed PVA is monomer soluble and not water soluble, 55% hydrolyzed PVA is very soluble in the vinyl monomer but is also partially soluble in water. A 75.2% hydrolyzed PVA has a greater degree of water solubility and therefore is not preferred. Oil-soluble, secondary dispersants other than those containing a major proportion of ring-opened alkylene oxide, such as ethylene oxide secondary dispersants, are also suitable for use in this invention. Suitable such secondary dispersants include those from the sorbitan ester class, glycerol ester or polyglycerol ester class as well as the low hydrolysis (less than 70%, preferably less than 60%, and more preferably less than about 55%) polyvinyl acetates which contain no polyethylene oxide segments or only a minor proportion thereof. Specific examples of secondary dispersants include sorbitan trioleate, sorbitan tri-stearate, sorbitan monooleate, sorbitan monompalmitate, glycerol monooleate, glycerol monostearate, triglycerol monooleate, 50% hydrolyzed polyvinyl acetate, and the like. A mixture of more than one of these dispersants may be used. In the use of a small amount of secondary dispersant, regardless of the porosifying effects, it is observed that colloidal stability is often enhanced. The use of less efficient porosifying dispersant is contemplated where porosity is not essential but added colloidal stability is preferred. The secondary dispersant(s) is used at a level of from about 0.001 part by weight to about 1.0 part by weight per 100 parts by weight of monomer, preferably from about 0.1 part by weight to about 0.5 part by weight per 100 parts by weight of monomer when increased porosity is desired. More than one secondary dispersant may be used in this invention.

The polymerization is initiated with a free radical initiator. The monomer-soluble or oil-soluble catalysts that may be used in the polymerization process of this invention are the alkanoyl, aroyl, alkaraoyl, and aralkanoyl diperoxides and monohydroperoxides, azo compounds, peroxy ester, percarbonated, and other free radical type catalysts. As examples of such catalysts, there may be named benzoyl peroxide, lauryl peroxide, diacetyl peroxide, cumene hydroperoxide, methyl ethyl ketone peroxide, diisopropylbenzene hydroperoxide, 2,4-dichlorobenzoyl peroxide, napthaoyl peroxide, t-butyl perbenzoate, di-t-butyl perphthalate, isopropyl percarbonate, acetyl cyclohexane sulfonyl peroxide, disecondary butyl peroxydicarbonate, 5-butyl peroxyneodecanoate, di-normal propyl peroxydicarbonate, azo-bis isobutyronitrile, $\alpha,\alpha'$-azodiisobutyrate, 2,2'-azo-bis-(2,4-dimethyl valeronitrile), and mixtures. One selects a particular initiator on the basis of it's characteristic half-life at the targeted polymerization temperature. The particular free radical catalyst employed might also depend upon the monomeric material(s) being polymerized, the molecular weight and color sensitivity for the use of the polymer. The amount of catalyst employed in the range of

about 0.005 parts by weight to about 1.00 parts by weight, more typically 0.01 to 0.05 weight parts per 100 weight parts of the monomer(s) polymerized, is satisfactory.

The suspension polymerization process may be carried out preferably at a temperature in the range of about 0 °C to about 100 °C and more preferably from about 40 °C to about 80 °C.

The preferred process to produce resins of this invention involves causing the ionic material to interact with and disrupt the colloidal dispersing residue. Suitable ionic materials are bases or acids as established above depending on whether the ion sensitive polymer forms an anionic or cationic salt upon the addition of ionic material. For the sake of brevity, the invention will be described in terms of the ion sensitive polymer which forms the anion of the resulting salt. Preferably, the ionic material is a monovalent inorganic or organic base such as an amine, sodium hydroxide, ammonium hydroxide, potassium hydroxide, lithium hydroxide, and the like. The most preferred ionic material is sodium hydroxide. Divalent and trivalent materials can crosslink the polyacrylic acid dispersant and would therefore not be as desirable. The examples of this invention illustrated below described in terms of using sodium hydroxide as the ionic material.

The primary dispersant is preferably the ion sensitive polymer and provides colloidal stabilization of the monomer droplets at an early stage of polymerization. Before a point during the polymerization at which the colloidal dispersing residue is more resistant to removal from the growing particles, ionic material is added to the polymerization medium. The ionic material, in this instance, NaOH, should be added from 0.5% to 50% conversion of monomer to polymer. If the NaOH is added at the beginning or before about 0.5% conversion, an unstable suspension may result. Preferably the NaOH is added at from 1% to 3% conversion, more preferably 1% to 2% conversion.

Usually the amount of ionic material needed to desorb the primary dispersant is from about 0.0010 part by weight to about 0.05 part by weight per 100 parts of monomer. More could be used if a higher level of ion sensitive polymer is employed, for instance when a particle size average of about 30 to 40 microns is desired for the resin.

If an acidic ion sensitive dispersant system is used which is disrupted by lowering pH, then rather than adding base to desorb the dispersant, an acid such as HCl could be used. The HCl would work in the same fashion as described above and should be added at similar low conversion levels as described above.

Polyvinyl halides include polyvinyl chloride, and polyvinyl fluoride, in addition to copolymers. Polyvinylidene halide includes polyvinylidene chloride and polyvinylidene fluoride, in addition to copolymers. Whether the polymer is a polyvinyl or polyvinylidene polymer, by convention, depends on the monomer present in the major amount, as there are contemplated many copolymer compositions combining one or more of the halogen or non-halogen comonomers mentioned below. Other suitable comonomers that may be included in minor amounts in the VH or VDH polymer are the olefins, unsaturated carboxylic acids such as acrylic acid, methacrylic acid, ethacrylic acid, α-cyanoacrylic acid, and the like; esters of acrylic acid, for example, methyl acrylate, ethyl acrylate, butyl acrylate, octyl acrylate, cyanoethyl acrylate, and the like; vinyl esters such as vinyl acetate and vinyl propionate; esters of methacrylic acid, such as methyl methacrylate, ethyl methacrylate, hydroxyethyl acrylate, butyl methacrylate, and the like; nitriles, such as acrylonitrile and methacrylonitrile; acrylamides, such as methyl acrylamide, N-methylol acrylamide, N-butoxy methacrylamide, and the like; halogen containing vinyl monomers such as vinyl fluoride, vinylidene fluoride, vinylidene chloride and vinyl bromide; vinyl ethers such as ethylvinyl ether, chloroethyl vinyl ether and the like; the vinyl ketones, styrene derivatives including α-methyl styrene, vinyl toluene, chlorostyrene; vinyl naphthalene; cross-linking monomers such as diallyl phthalate, trimethylol propane triacrylate, allyl methacrylate and the like; allyl and vinyl chloroacetate, vinyl acetate, vinyl pyridine, and methyl vinyl ketone; olefins such as ethylene and propylene; and other copolymerizable monomers or mixtures of monomers having suitable reactivity ratios with vinyl chloride and known to those skilled in the art. Particularly preferred among the polymers which have a major amount of vinyl chloride are the polyvinyl chloride homopolymers substantially free of gel particles and crosslinks. The invention will be further described in terms of a polyvinyl chloride polymer as the most preferred embodiment.

The inherent viscosity (I.V.) (ASTM D-1243) of polyvinyl chloride, used in this invention generally ranges from about 0.3 to about 2.0, with a preferred I.V. range of from about 0.5 to about 1.2 and a still more preferred I.V. range of from about 0.6 to about 0.95. A combination of two powder PVC polymers each having a different average molecular weight is contemplated also.

## Powder Compounding

The powder compounds of the invention may optionally contain a low porosity small particle size dispersion resin used as a drying resin. The particle size average of the dispersion resin additive ranges

generally from about 0.5μ to about 25μ with the most typical average particle size in the range of 1μ to 5μ. The amount of optional dispersion resin contained can range from 1 to 99 parts per 100 parts of suspension coating resin however it is preferred to incorporate, when desired, a minor amount of from 2 to 15, most preferably from 4 to 10 weight parts per 100 weight parts of suspension coating resin.

The powder compounds can be prepared by a variety of dry mixing methods preferably using high intensity mixers. A jacketed mixing vessel can be used to control the temperature of the mix. Mixing temperatures can be controlled within a temperature range generally from 40°C to 70°C during the incorporation of compounding ingredients. Optional liquid additives such as plasticizer are generally gradually incorporated under a rolling agitated batch. Preferably, the temperature of the mix during incorporation of liquids is between about 75° and 85°C. The temperature range at which the dry point is reached using monomeric plasticizers generally ranges from about 85° to 105°C for PVC, and when polymeric plasticizers are present the dry mix point may be reached only at a higher temperature. The powder compound is preferably cooled in a cooling mixer under mixing such as a ribbon blender to no more than about 55°C. The powder compound is then screened typically through a 40 mesh (200μ) screen or 100-120 mesh (150-125μ). If dispersion resin is added it is preferred to add the resin during the cooling step.

Specific examples of optional plasticizers include derivatives of carboxylic acid esters including the various derivatives of adipic acid, azelaic acid, phthalic acid, benzoic acid, and citric acid, isobutyric acid, isophthalic acid derivatives, sebacic acid derivatives, isosebacic acid derivatives, stearic acid, tartaric acid, oleic acid, succinic acid; phosphoric acid derivatives; derivatives of terephthalates, pentaerythritol, trimellitic acid, and mixtures. Plasticizers, if present, are desiredly used at from 10 to 120 phr preferably from 10 to about 100 phr. Other plasticizers can be included for example, partial esters of the above carboxylic acids, ethers, glycol derivatives, glycolates, glycerol derivatives. These are set forth in The Technology of Plasticizers, by Sears and Darby, pages 893-1085, John Wiley & Sons, New York, 1982. Preferred plasticizers are $C_{10}$ and higher alkyl diesters of phthalic acid, bisphthalates, $C_8$ and higher alkyl triesters of trimellitic acid, for example di-isodecyl phthalate (DiDP) and tri-octytrimellitate (TOTM).

In addition to the foregoing plasticizers, which are monomeric, various polymers exhibiting plasticizing characteristics can also be utilized such as the polyesters, halogenated polyolefins, oxidized polyolefins, polyepichlorohydrins, polyacrylates, ethylene copolymers, copolymers prepared from diolefins and, overpolymers of polar monomers overpolymerized onto flexible materials.

Polyester plasticizers are generally made from a dicarboxylic acid having from about 3 to about 12 carbon atoms and from a diol having from about 2 to about 1000 carbon atoms with propylene glycol being preferred. Examples of suitable polyesters include various esters made from adipic acid such as a polyester having a molecular weight of 6,000, e.g., Paraplex® G-40, a polyester made from adipic acid having a molecular weight of about 2,200, Paraplex® G-50, a polyester made from adipic acid having a molecular weight of about 3,300, Paraplex® G-54, a polyester made from azelaic acid having a molecular weight of about 2,200, Plastolein® 975, a polyester made from sebacic acid such a Paraplex® G-25, a polyester made from glutaric acid, a polycaprolactone polyester, and the like. Paraplex is a trademark of C.P. Hall Co. and Plastolein is a trademark of Emery Industries, Inc.

A variety of other optional additives can be used to provide stabilization, pigmentation, mold release, foaming, flame retardance, and biocidal attributes, as well as improved economics.

Thermal stabilizer systems are typically employed herewith. A combination of primary stabilizer such as a tin compound and a co-stabilizer may be used. Other primary stabilizers are based on lead, barium, cadmium, zinc, calcium, antimony, and tin. These are commercially available from catalogs such as Chemical Week® Buyers' Guide , Oct. 1990. Specific examples include lead sulfate, lead stearate, barium and cadmium salt complexes, and antimony mercaptides, to list a few. The organotins are include a broad variety for example dimethyl tin-bis isooctylthioglycolate (methyltin), di-butyltin-bis-isooctylthioglycolate (butyltin), di-octyltin-bis-isooctylthioglycolate, mixed metal alkyltins, dialkyl tin di-carboxylates, methyltin mercaptides, butyltin mercaptides, dialkyl tin bis(alkyl mercaptocarboxylate) including di-n-octyltin-S,S'-bis-(isooctyl mercaptoacetate), and butylthiostannoic acid, and mixtures thereof. Selection of a suitable alkylated tin depends on end use requirements having features such as low toxicity e.g. higher alkyl types, FDA approval, USP class 6 approval, good color, clarity and compatibility, low plate-out on equipment, and non-staining properties. Generally stabilizer is employed in amounts from 0.1 to 15 phr, preferably from 1 to 5 phr, more preferably from 1.5 - 4 phr.

Co-stabilizers include, for example, polyols, phosphite stabilizers, polymeric phosphites, thioesters such as dilauryl thiodipropionate, beta-diketones and epoxy derivatives such as epoxidized oils or epoxy resin including precursors. Preferred co-stabilizers are epoxidized vegetable oils, like epoxidized soybean oil and epoxidized linseed oil. Co-stabilizer levels are suggested at from 0.1 to 20 weight parts, preferably from 1 to

about 10 phr, and most preferably from 3 to 8 weight parts per 100 weight parts combined of polymer. The preferred stabilizer system is a mixed metal salts such as barium/cadmium salts, cadmium/zinc salts, and the like.

Antioxidants are optionally included like the various hindered alkylated phenolics such as 2,6-di-t-butyl-4-methyl phenol also referred to as butylated hydroxy toluene, bis-phenols such as 2,2'-methylenebis(4-methyl-7-t-butylphenol), thio-phenols such as 4,4'-dihydroxydiphenyl sulfide, otherwise referred to as thiodiphenol, and diphenyl ethers such as 4,4'-dihydroxydiphenyl ether, and mixtures thereof. When used, antioxidants are generally present in an amount from about 0.05 to 5 parts per hundred weight parts of powder resin PVC (phr) and preferably, when present, are used at from 0.1 to 0.4 phr.

The powder coating compounds are usually pigmented and contain pigment in a pigment to binder ratio of about 0.1:100 to about 75:100. Any of the conventional pigments can be used, for example, metallic oxides such as titanium dioxide, zinc oxide and the like, sulfates, carbonates, carbon black, organic pigments such as phthalocyanin blue and green pigments; titanates such as chrome antimony titanate, silica, talc, china clay, metallic flakes such as aluminum flake, metallic powders, metallic hydroxides, "Affair" pigments such as mica coated with titanium dioxide and a variety of other inorganic, organic pigments, dyes and flakes.

The invention is best exemplified by the following examples. The resin compositions listed in the table below were polymerized using the modified suspension method described herein and further compounded to prepare powder compounds and coated metal plaques. The method of polymerization entailed charging 180 weight parts of initial water, initiator, and carboxyl polymer in amounts listed in the table into the polymerizer. The contents were agitated. The agitation was stopped and vinyl chloride monomer (VCM) was introduced without agitation. The monomer layer is above the aqueous layer. A methanol solution of 47% hydrolysis polyvinyl acetate was introduced into the top monomer layer with a delay of several minutes to allow diffusion. The agitation was commenced and the reactor contents heated. NaOH was added 15 minutes after initiation. Thirty-seven weight parts of fill water was proportioned during polymerization to maintain a constant volume for the polymerization media. A phenolic short stop (SS) was added at about 75% to 85% conversion of monomers. Defoamer, which is optional, was added to the suspension after short stop. The polymer resin was then stripped of residual monomer and dried. Typically these resins are dried with a venturi dryer to a free flowing powder. Powder compounds were made and applied to various substrates. It was observed that fused coatings made from these resins were superior in smoothness and gloss compared with compounds made with conventional suspension resins.

TABLE (Weight Parts)

| | Example 1 | Example 2 | Example 3 | Example 4 | Example 5 | Example 6 |
|---|---|---|---|---|---|---|
| VCM | 100 | 100 | 100 | 100 | 100 | 100 |
| DM Water | 180/37 | 180/37 | 180/37 | 180/37 | 180/37 | 180/37 |
| carboxyl polymer | 0.1 | 0.075 | 0.05 | 0.1 | 0.075 | 0.075 |
| PVA | 0.3 | 0.3 | 0.3 | 0.3 | 0.3 | 0.3 |
| Defoamer | 0.05 | 0.05 | 0.05 | 0.05 | 0.05 | 0.05 |
| BPA[1]/MEOH | 0.05 | 0.05 | 0.05 | 0.05 | 0.05 | 0.05 |
| SBP[2] | | 0.018 | ---- | ---- | --- | --- |
| EHP[3] | 0.009 | | 0.03 | 0.03 | 0.009 | |
| SS[4] | 0.023 | | 0.01 | 0.01 | 0.023 | |
| NaOH | 0.0222 | 0.0222 | 0.0222 | 0.0222 | 0.0222 | 0.0222 |

[1] - bis-phenol A type short stopper
[2] - secondary butyl peroxydicarbonate
[3] - di-2-ethylhexyl peroxydicarbonate
[4] - tertiary butyl peroxypivalate

The following Inherent viscosity (I.V) and average particle sizes in microns (APS) (aps) were obtained for the resin examples above:

| | EX1 | EX2 | EX3 | EX4 | EX5 | EX6 |
|---|---|---|---|---|---|---|
| APS | 75 | 75 | 120 | 75 | 100 | 75 |
| I.V. | 0.68 | 0.84 | 0.76 | 0.76 | 0.68 | 0.95 |

The following examples illustrate the improved fusion characteristics of powder coatings made from PVC resins polymerized with the modified suspension process. PVC resins were first polymerized at temperatures and recipes which yielded equal inherent viscosities and particle sizes for comparison. The following resin data illustrate the resin properties; inventive Examples 7, 8, and 10, 11 are comparable to controls 9, 12 and 13 made via a conventional suspension method.

| Example | 7 | 8 | C-9 | 10 | 11 | C-12 | C-13 |
|---|---|---|---|---|---|---|---|
| Resin I.V. | 0.64 | 0.66 | 0.64 | 0.83 | 0.84 | 0.81 | 0.79 |
| A.P.S. | 60 | 84 | 80 | 70 | 80 | 57 | 80 |

Powder compounds were prepared with the above resins by mixing according to the following compound formulation:

| | wt. parts |
|---|---|
| PVC resin | 100 |
| Drying resin[1] | 6 |
| DIDP[2] | 50 |
| ESO[3] | 8 |
| Stabilizer | 4 |
| $TiO_2$ | 8 |

[1]Dispersion PVC
[2]Di-isodecyl phthalate
[3]Epoxidized soybean oil

Powder draw-downs were prepared using a 100 mil gap knife on standard metal ferro plates and heated under the temperature and dwell times listed below.

| Temp (°F)/Time(min.) | Gloss Reading | | |
|---|---|---|---|
| Example | 7 | 8 | C-9 |
| 400°/5 min. | 11.3 | 50 | 4.7 |
| 425°/5 min. | 25 | 53 | 12 |
| 450°/5 min. | 26 | 67 | 23 |
| 475°/5 min. | 45 | 69 | 24 |

The above examples indicate a significant improvement in gloss achieved after fusing the coated plates. Higher gloss readings indicate better gloss. Examples 7, 8, and C-9 have similar average particle size and molecular weight. Examples 6 and 7 were prepared using the modified suspension process and thus provides improved powder fusion characteristics illustrated. The higher gloss readings were obtained at all temperatures tested.

Examples 10 and 11 were compared to C-12 and C-13 prepared in the same manner as above in order to demonstrate the advantages at a higher resin molecular weight.

| Temp (°F)/Time(min.) | Gloss Reading | | | |
|---|---|---|---|---|
| Example | 10 | 11 | C-12 | C-13 |
| 400°/5 min. | 7.9 | 2.9 | 2.6 | 2.3 |
| 425°/5 min. | 28 | 23 | 5.6 | 2.6 |
| 450°/5 min. | 25 | 40 | 15.6 | 5.6 |
| 475°/5 min. | 50 | 65 | 27.6 | 7.3 |

The above data indicate the significant higher gloss attainable using resins made with the modified suspension method as examples 10 and 11 show. These higher molecular weight resins would typically need higher temperatures such as 450°F and 475OF and it is shown above that adequate fusion is taking place whereas conventional suspension resins are not suitable for powder coating applications.

**Claims**

**1.** A suspension polymerized polyvinyl halide or polyvinylidene halide resin, in powder form, used for powder molding and powder coating wherein said resin is polymerized in an aqueous suspension medium with the use of a dispersant system comprising an ion sensitive dispersant and wherein during polymerization of vinyl halide or vinylidene halide monomers, an ionic material is introduced into the polymerization medium before monomer conversion is greater than about 50%.

**2.** The resin of claim 1 wherein said dispersant system further comprises a secondary dispersant means for providing enhanced particle porosity.

**3.** The resin of claim 2 wherein said secondary dispersant is selected from the group consisting of polyvinyl acetate having less than 70% hydrolysis, sorbitan esters, glycolesters, glycerolesters, and polyglycerol esters.

**4.** A process for preparing a suspension polymerized resin from polyvinyl halide or polyvinylidene halide monomer said resin used for powder coating or powder molding comprising the steps of

(a) charging water and at least one ion sensitive primary dispersant(s) to a polymerization vessel equipped with agitation and cooling means;

(b) agitating said water and said dispersant(s)

(c) reducing or stopping said agitation such that non-turbulent flow is achieved, water layer is maintained;

(d) charging at least one said monomer to the polymerization vessel such that there is formed two liquid layers in the polymerization vessel, one being an aqueous layer and a monomer layer;

(e) optionally charging to the vinyl monomer layer at least one and at least one secondary dispersant;

(f) allowing said catalyst to diffuse through the vinyl monomer top layer;

(g) increasing the agitation such that the entire polymerization medium is an aqueous polymerisation suspension;
(h) conducting the polymerization of the vinyl monomer to a conversion of from about 1% to about 50%;
(i) charging an monovalent inorganic or organic ionic compound to the polymerization medium in amounts sufficient to substantially desorb the ion sensitive dispersant off the monomer droplets;
(j) continuing the polymerization of the vinyl monomer to form particles; and
(k) removing the polymerized resin from the reaction vessel.

**5.** A process of claim 4 wherein said vinyl monomer is vinyl chloride.

**6.** A process of claim 4 wherein the ion sensitive primary dispersant is a lightly crosslinked interpolymer of acrylic acid.

**7.** A process of claim 4 wherein said secondary dispersant is at least one dispersant selected from the group consisting of sorbitan ester and hydrolyzed polyvinyl acetate having a hydrolysis level less than about 70%.

**8.** A process of claim 7 wherein said secondary dispersant is a hydrolyzed polyvinyl acetate having a hydrolysis level less than about 60%.

**9.** A process of claim 8 wherein said polyvinyl acetate has a hydrolysis level less than about 55%.

**10.** A process of claim 4 wherein the level of said ion sensitive dispersant is from about 0.02 to about 0.06 part by weight per 100 parts by weight of vinyl monomer.

**11.** A process of claim 10 wherein the level of said dispersant is from about 0.02 to about 0.06 part by weight per 100 parts by weight of vinyl monomer.

**12.** A process of claim 4 wherein said ionic material is added to the polymerization medium at from 1% to 10% conversion of vinyl monomer to polymer.

**13.** A process of claim 4 wherein the level of said secondary dispersant is present at from about 0.1 part by weight to about 0.4 part by weight per 100 parts by weight vinyl monomer.

**14.** A process of claim 4 wherein said secondary dispersant is premixed with the vinyl monomer prior to being charged into the polymerization vessel.

**15.** A process of claim 4 wherein in (a) the water and ion sensitive dispersant are premixed prior to being added to the polymerization vessel.

**16.** A process of claim 4 wherein in (d) the catalyst is combined with at least one solvent at least one secondary dispersant is premixed with said vinyl monomer prior to being added to the polymerization vessel.

**17.** A powder coating compound comprising a thermoplastic suspension polymerized resin, said resin comprising at least one polymerized monomer selected from the group consisting of vinyl chloride, polyvinyl fluoride, polyvinylidene chloride, and polyvinylidene chloride, wherein said at least one monomer is suspended in aqueous medium with a dispersant system comprising an ion sensitive dispersant, and wherein after initiation of polymerization, an ionic material is introduced to said medium prior to about 50% conversion of said at least one monomer, said compound further comprising a stabilizer and a plasticizer.

**18.** The compound of claim 17 further comprising a pigment.

**19.** The compound of claim 17 further comprising a dispersion polyvinyl halide resin having an average particle size of from about 0.5$\mu$ to 25$\mu$.

**20.** The compound of claim 19 wherein the amount of said dispersion resin is from 2 to 10 weight parts per 100 weight parts of said suspension polymerized resin.

**21.** A coated article containing adhered to a surface, the powder coating compound of claim 17.

**22.** A hollow molded article comprising in the fused state, the resin of claim 1.

**23.** A molded article of claim 22 made by slush molding.

**24.** A molded article of claim 22 made by rotational molding.

European Patent Office

# EUROPEAN SEARCH REPORT

Application Number
EP 94 10 2756

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | US-A-4 711 908 (R. HAWRYLKO)<br>* column 9, line 54 - column 11, line 3; claim 1 *<br>--- | 1-24 | C08F14/06<br>C08F14/08<br>C08F14/20<br>C08F14/22 |
| X | AU-A-464 627 (SHINETSU CHEM. CO.)<br>* claim 1; examples 34,52 *<br>--- | 1-24 | |
| X | US-A-3 706 705 (S.KOYANAGI ET AL.)<br>* claims 1,7 *<br>--- | 1-24 | |
| X | DE-A-35 05 238 (HOECHST AG)<br>* claim 1; example 2 *<br>--- | 1-24 | |
| A | US-A-4 507 425 (D.WEAVER)<br>----- | 19 | |
| | | | TECHNICAL FIELDS SEARCHED (Int.Cl.5) |
| | | | C08F |

The present search report has been drawn up for all claims

| Place of search | Date of completion of the search | Examiner |
|---|---|---|
| THE HAGUE | 20 May 1994 | Glikman, J-F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document